Europäisches Patentamt

European Patent Office

Office européen des brevets

(19)

(11) Veröffentlichungsnummer : **0 124 740**
**B1**

(12)

# EUROPÄISCHE PATENTSCHRIFT

(45) Veröffentlichungstag der Patentschrift :
11.01.89

(51) Int. Cl.⁴ : **B 65 G 47/16**

(21) Anmeldenummer : 84103289.9

(22) Anmeldetag : 24.03.84

(54) **Vorrichtung zur Bildung und zum Abtransport von Tabakportionen.**

(30) Priorität : 04.05.83 DE 3316176

(43) Veröffentlichungstag der Anmeldung :
14.11.84 Patentblatt 84/46

(45) Bekanntmachung des Hinweises auf die Patenterteilung : 11.01.89 Patentblatt 89/02

(84) Benannte Vertragsstaaten :
DE FR GB NL SE

(56) Entgegenhaltungen :
FR--A-- 2 225 362
GB--A-- 2 066 760

(73) Patentinhaber : **Focke & Co. (GmbH & Co.)**
**Siemensstrasse 10**
**D-2810 Verden (DE)**

(72) Erfinder : **Focke, Heinz**
**Moorstrasse 64**
**D-2810 Verden (DE)**
Erfinder : **Balmer, Oskar**
**Preussisch-Eylau-Strasse 11**
**D-2810 Verden (DE)**

(74) Vertreter : **Bolte, Erich, Dipl.-Ing.**
**Patentanwälte Dipl.-Ing. Hans Meissner Dipl.-Ing.**
**Erich Bolte Hollerallee 73**
**D-2800 Bremen 1 (DE)**

Anmerkung : Innerhalb von neun Monaten nach der Bekanntmachung des Hinweises auf die Erteilung des
europäischen Patents im Europäischen Patentblatt kann jedermann beim Europäischen Patentamt gegen das erteilte
europäische Patent Einspruch einlegen. Der Einspruch ist schriftlich einzureichen und zu begründen. Er gilt erst als
eingelegt. wenn die Einspruchsgebühr entrichtet worden ist (Art 99(1) Europäisches Patentübereinkommen).

EP 0 124 740 B1

# Beschreibung

Die Erfindung betrifft eine Vorrichtung zur Bildung von Portionen aus faserigem Gut, insbesondere Schnittabak, und zum Abtransport derselben durch einen Förderer mit Aufnahmen für je eine Portion, insbesondere durch eine Becherkette, wobei die Portionen durch ein oberhalb des Förderers angeordnetes Verteilerorgan den Bechern oder dgl. des Förderers zuführbar sind.

Bei einer bekannten Vorrichtung dieser Art (DE-OS 23 38 374) werden (Grob-) Portionen von einem (in Abwärtsrichtung geförderten) Strang abgetrennt und jeweils alternativ einer von zwei Tabakwaagen zugeführt. Durch diese wird das tatsächliche Gewicht der Portion festgestellt, die geringfügig unterhalb des Sollgewichts liegt. Durch eine jeder Tabakwaage zugeordnete Feindosiereinrichtung wird eine dem festgestellten Differenzgewicht entsprechende Ergänzungsmenge zugeführt, bis das Sollgewicht erreicht ist. Die korrekt dosierte Portion wird über aus einzelnen schwenkbaren Klappen bestehende Verteilerorgane einem der Becher einer unterhalb der Verteilerorgane bewegten Becherkette zugeführt.

Die vorgenannte Lösung in bezug auf die Ausbildung und Arbeitsweise des Verteilerorgans hat sich in der Praxis als wenig leistungsfähig erwiesen, da die schwenkbaren Klappen nur eine begrenzte Durchlaufgeschwindigkeit für die Portionen zulassen. Des weiteren sind derartige Klappen aufgrund der Frequenz der Schwenkbewegungen störanfällig.

Der Erfindung liegt die Aufgabe zugrunde, eine Vorrichtung zur Verteilung und Abförderung von Portionen aus Schnittabak od. dgl. vorzuschlagen, bei der die Portionen bei hoher Leistung, also Arbeitsgeschwindigkeit, störungsfrei an einen Abförderer (Becherkette) weitergeleitet werden können bei zugleich schonender Behandlung der Portionen.

Zur Lösung dieser Aufgabe ist die erfindungsgemäße Vorrichtung dadurch gekennzeichnet, daß das Verteilerorgan wenigstens eine synchron mit dem mit Aufnahmen versehenen Förderer umlaufende Verteilerwand aufweist zur Aufnahme jeweils einer Portion und Weiterleitung an eine Aufnahme des Förderers nach einer Teilbewegung der Verteilerwand.

Gemäß einer bevorzugten Ausführungsform ist das Verteilerorgan als drehend angetriebenes Zellenrad ausgebildet mit mindestens einer diametral verlaufenden Trennwand, nämlich der Verteilerwand, und an deren Stirnseiten angebrachten (kreisflächenförmigen) Seitenwänden. Die Verteilerwand unterteilt das so ausgebildete rollen- bzw. walzenartige Verteilerorgan in zwei Kammern mit annähernd halbkreisförmigem Querschnitt. Das Verteilerorgan bzw. die Verteilerwand wird drehend um eine mittige Drehachse angetrieben, und zwar in stets gleichbleibender Drehrichtung, die mit der Bewegungsrichtung des Förderers übereinstimmt. Die (lineare) Förderbewegung desselben und die Rotation des Verteilerorgans sind in fester Relation aufeinander abgestimmt (Synchronlauf). Förderer und Verteilerorgan bzw. Verteilerwand haben deshalb stets eine vorgegebene Relativstellung zueinander, derart, daß jede von der Verteilerwand aufgenommene Portion zuverlässig in einen unterhalb vorbeibewegten Becher geleitet wird.

Die Portionen werden dem Verteilerorgan von oben her durch Abwerfen (Eigengewicht) zugeführt, und zwar alternativ von mehreren Zuführungsorganen, insbesondere Aufnahmen von Tabakwaagen. Üblicherweise sind zwei Tabakwaagen einem gemeinsamen Verteilerorgan zugeordnet. Die beispielsweise als Zellenrad ausgebildeten Aufnahmen der Tabakwaagen übergeben alternativ die dosierten Portionen an das Verteilerorgan durch Abwerfen der Portion auf die umlaufende Verteilerwand.

Diese ist nach einem weiteren Vorschlag der Erfindung an den radial außenliegenden Längsrändern mit jeweils in Umlaufrichtung weisenden Haltewandungen versehen, die als teilkreisbogenförmige Haltebleche ausgebildet sind. Diese bilden zusammen mit der Verteilerwand und Ortsfesten, teilkreisbogenförmigen Führungsflächen Kammern bzw. Räume für die zeitweilige Aufnahme einer Portion bei im übrigen auf der radial außenliegenden Seite offenem Verteilerorgan.

Das erfindungsgemäße Verteilerorgan zeichnet sich durch Zuverlässigkeit und hohe Leistungsfähigkeit aus, so daß bis zu 80 Portionen je Minute fehlerfrei übergeben werden können.

Weitere Einzelheiten der Erfindung beziehen sich auf die konstruktive Ausgestaltung des Verteilerorgans in Verbindung mit zugeordneten Organen sowie auf funktionelle Zusammenhänge.

Ein Ausführungsbeispiel der Erfindung wird nachfolgend anhand der Zeichnungen näher erläutert. Es zeigen:

Fig. 1 eine Gesamtansicht der Vorrichtung zur Bildung und zum Abtransport von Tabak-Portionen in Vorderansicht,

Fig. 2 eine um 90° versetzte Seitenansicht bzw. ein Vertikalschnitt der Vorrichtung gemäß Fig. 1,

Fig. 3 ein (unterer) Bereich der Vorrichtung mit Feindosiereinrichtungen, Tabakwaagen, Verteilerorgan und Förderer in Vorderansicht bzw. im Vertikalschnitt bei vergrößertem Maßstab,

Fig. 4 die Einzelheit mit Verteilerorgan in einer Ansicht entsprechend Fig. 3 bei nochmals vergrößertem Maßstab,

Fig. 5 eine Darstellung entsprechend Fig. 4 bei veränderter Relativstellung des Verteilerorgans.

Das in den Zeichnungen dargestellte Ausführungsbeispiel einer Vorrichtung dient zur Bildung und zum Abtransport von Portionen 10 aus Schnittabak. Dieser befindet sich als ungeordneter, wirrer Tabakvorrat 11 in einem trichterförmigen Vorratsbehälter 12. Durch eine umlaufende Stachelwalze 13 in Verbindung mit einem translatorisch bewegten Abstreifkamm 14 wird ein dünnes möglichst gleichförmiges Tabakvlies 15 zunächst auf dem Umfang der Stachelwalze 13 gebildet und dann in Abwärtsrichtung in einen im wesentlichen aufrechten Tabakschacht 16 gefördert. In diesem wird durch konvergierende Gestaltung in Abwärtsrichtung und durch weitere Maßnahmen aus dem Tabakvlies 15 ein Tabakstrang 17 mit schließlich verhältnismäßig homogener Querschnittsstruktur gebildet.

Der am unteren Ende aus dem Tabakschacht 16 austretende Tabakstrang gelangt in den Bereich einer Trennvorrichtung 18. In dieser werden die einzelnen Portionen 10 (untergewichtige Grobportionen) vom Tabakstrang 17 abgetrennt, und zwar durch relativ zueinander bewegbare, von den Seiten her in den Tabakstrang 17 eintretende Trennkämme 19 und 20.

Die überwiegend unterdimensionierten Portionen 10 werden jeweils einer von zwei Tabakwaagen 21 und 22 zugeführt. Durch diese wird das Gewicht der Portion 10 festgestellt. Durch jeder Tabakwaage zugeordnete Feindosieraggregate 23 und 24 wird eine von der jeweiligen Tabakwaage 21, 22 festgestellte Differenzportion 25 der gewogenen Portion 10 zugeführt, so daß diese das Sollgewicht (z. B. 50 g) erreicht hat.

Die korrekt bemessene Portion 10 wird sodann an ein für beide Tabakwaagen 21, 22 gemeinsames Verteilerorgan 26 weitergeleitet und von diesem in einen Becher 27 einer unterhalb des Verteilerorgans 26 in horizontaler Ebene umlaufenden Becherkette 28 geleitet. Die Becherkette 28 ist vorzugsweise kontinuierlich angetrieben.

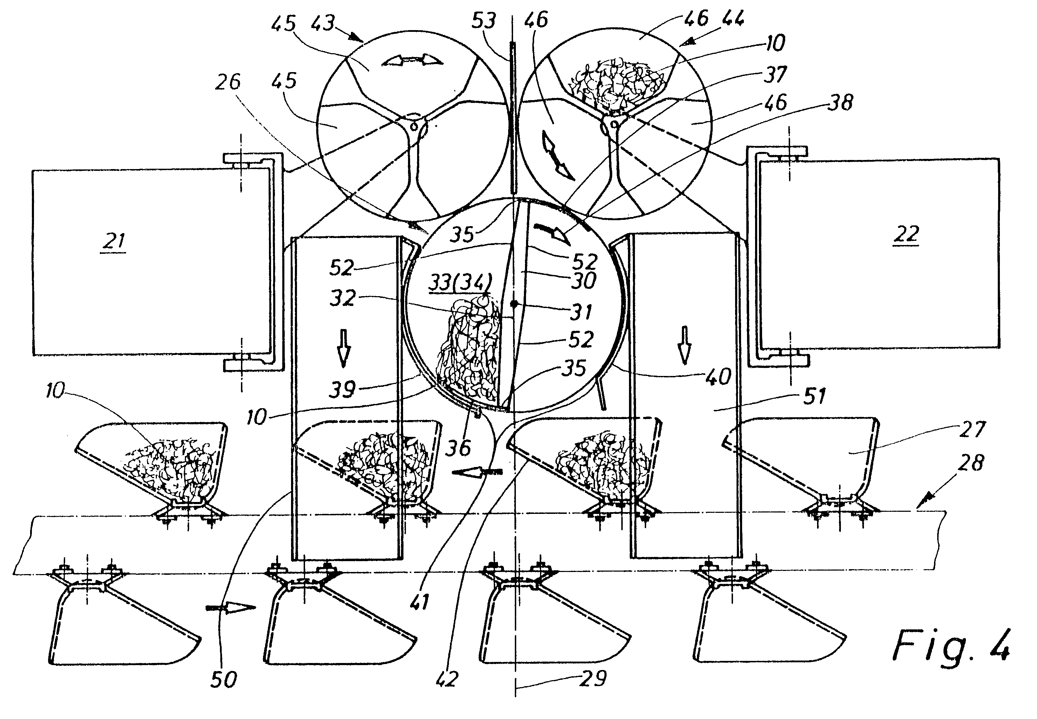

Das gemeinsame, mittig zu einer Mittelebene 29 der Vorrichtung gelagerte Verteilerorgan 26 besteht im wesentlichen aus einer diametral verlaufenden Verteilerwand 30. Diese ist um eine sich in der Mittelebene 29 erstreckende mittige Drehachse 31 drehend angetrieben. An seitlichen Stirnwänden 32 der Verteilerwand 30 schließen Seitenwände 33 und 34 an, die eine kreisflächenförmige Gestalt haben. An den radial außenliegenden Längsseiten 35 der Verteilerwand 30 sind Haltewandungen angebracht, nämlich kreisbogenförmige Halteblecher 36 und 37. Diese erstrecken sich bündig mit der äußeren Umfangsbegrenzung der Seitenwände 33, 34 kreisbogenförmig jeweils in Drehrichtung (Pfeil 38) des Verteilerorgans. Die Haltebleche 36, 37 tragen zeitweilig eine Portion 10 bei entsprechender Relativstellung der Verteilerwand 30 (beispielsweise Fig. 4).

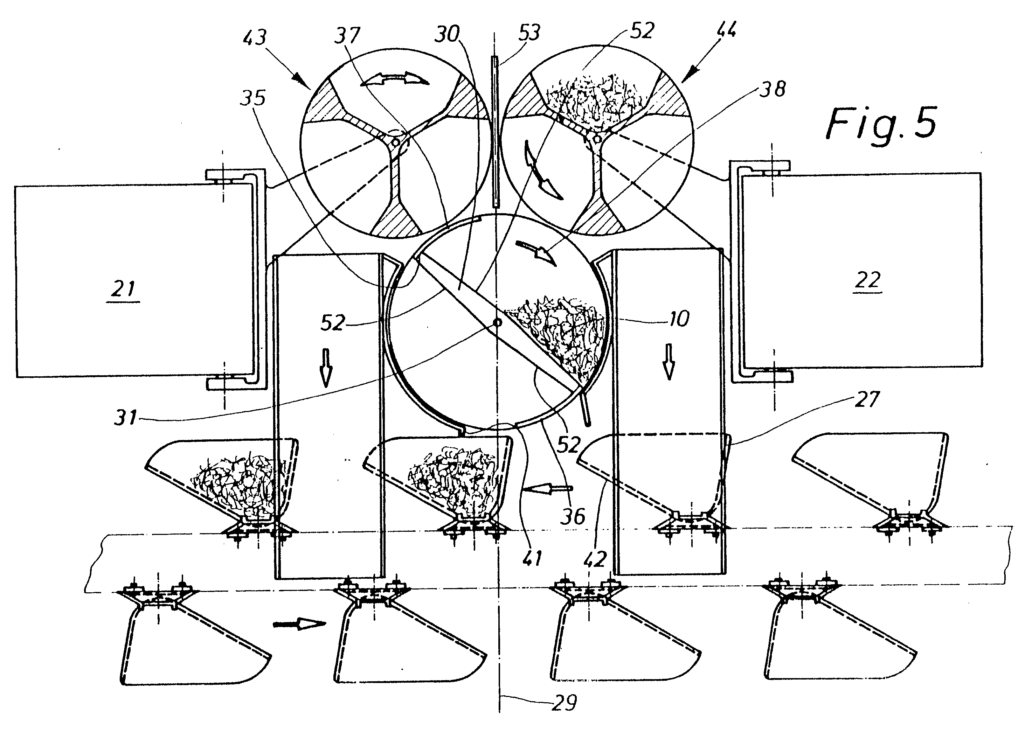

Mit dem Verteilerorgan 26 wirken weiterhin fest angeordnete Führungsbleche 39 und 40 zusammen. Diese sind seitlich unmittelbar benachbart zum Verteilerorgan 26 angeordnet und kreisbogenförmig gestaltet, unmittelbar benachbart zur Bewegungsbahn des Verteilerorgans. Die Führungsbleche 39 und 40 erstrecken sich in einem überwiegend seitlichen Bereich des Verteilerorgans 26, derart, daß zusammen mit diesem zeitweilig eine geschlossene Kammer gebildet wird, in der die Portion verlustfrei gehalten wird (Fig. 4 und 5). Die Führungsbleche 39, 40 sind so angeordnet und bemessen, daß zwischen diesen eine im wesentlichen nach unten weisende Abwurföffnung 41 versetzt zur Mittelebene 29 gebildet wird.

Der größere Bereich dieser Abwurföffnung 41 befindet sich auf der in bezug auf die Bewegungsrichtung der Becherkette 28 nach rückwärts gerichteten Seite der Mittelebene 29. Dadurch ist sichergestellt, daß bei entsprechender Relativstellung der Verteilerwand 30 eine Portion in einen unterhalb des Verteilerorgans 26 bewegten Becher 27 gefördert wird.

Die Verteilerwand 30 ist bei dem vorliegenden Ausführungsbeispiel mit einem zu den radial außenliegenden Seiten konvergierenden Querschnitt ausgebildet. Es entstehen dadurch leicht geneigte Gleitflächen 52, auf denen die Portionen 10 alternativ aufliegen. Durch geeignete Materialauswahl (Metall) und durch diese Gestaltung ist gewährleistet, daß eine Tabakportion bei annähernder 45°-Stellung der Verteilerwand 30 (Fig. 5) nach außen (Radialrichtung) gleitet. In der Position gemäß Fig. 5 liegt die Portion 10 zunächst noch an dem benachbarten Führungsblech 40 an. Bei Weiterbewegung der Verteilerwand 30 wird jedoch die Abwurföffnung 41 soweit freigegeben, daß die betreffende Portion 10 in den nunmehr in entsprechender Relativstellung bereitstehenden Becher 27 gelangt. Die Haltebleche 36, 37 sind dabei stets auf der zur Abwurfseite der Verteilerwand 30 gegenüberliegenden Seite angeordnet.

Die Drehbewegung der Verteilerwand 30 bzw. des Verteilerorgans 26 und die lineare Förderbewegung der Becherkette 28 sind exakt aufeinander abgestimmt, derart, daß während der Phase der Übergabe einer Portion 10 an einen Becher 27 dessen im vorliegenden Fall schräg angeordnete Auffangwand 42 in Förderrichtung nach vorn weisend über die Verteilerwand 30 hinausragt. Diese befindet sich während dieser Phase in einer annähernd aufrechten Stellung. Durch die genannte Relativstellung zwischen Verteilerwand 30 und Becher 27 ist die störungsfreie Übergabe der Portion 10 gewährleistet.

Die Verteilerwand 30 als Kern des Verteilerorgans 26 ermöglicht den Empfang einer Portion 10 in praktisch jeder Relativstellung alternativ von einer der Aufnahmen 43 und 44 der Tabakwaagen 21, 22. Die Aufnahmen 43, 44 sind bei dem gezeigten Ausführungsbeispiel als Zellenrad ausgebildet mit drei Zellen 45 bzw. 46 je zur Aufnahme einer Portion. Die sich jeweils in der oberen Zelle 45 bzw. 46 befindende Portion wird durch die Tabakwaage 21, 22 gewogen. In der gleichen Stellung wird die Differenzportion 25 zugeführt. Danach wird das die Aufnahme 43, 44 bildende Zellenrad längs eines Teilkreises gedreht, so daß die betreffende Zelle 45 bzw. 46 nach unten gelangt (schräg nach unten gerichtete Position), in der die Portion 10 aus der betreffenden Zelle 45 bzw. 46 herausgleitet in das Verteilerorgan 26. Die Aufnahmen 43, 44 sind in beiden Richtungen drehend antreibbar aus Gründen, die noch im einzelnen zu erläutern sind.

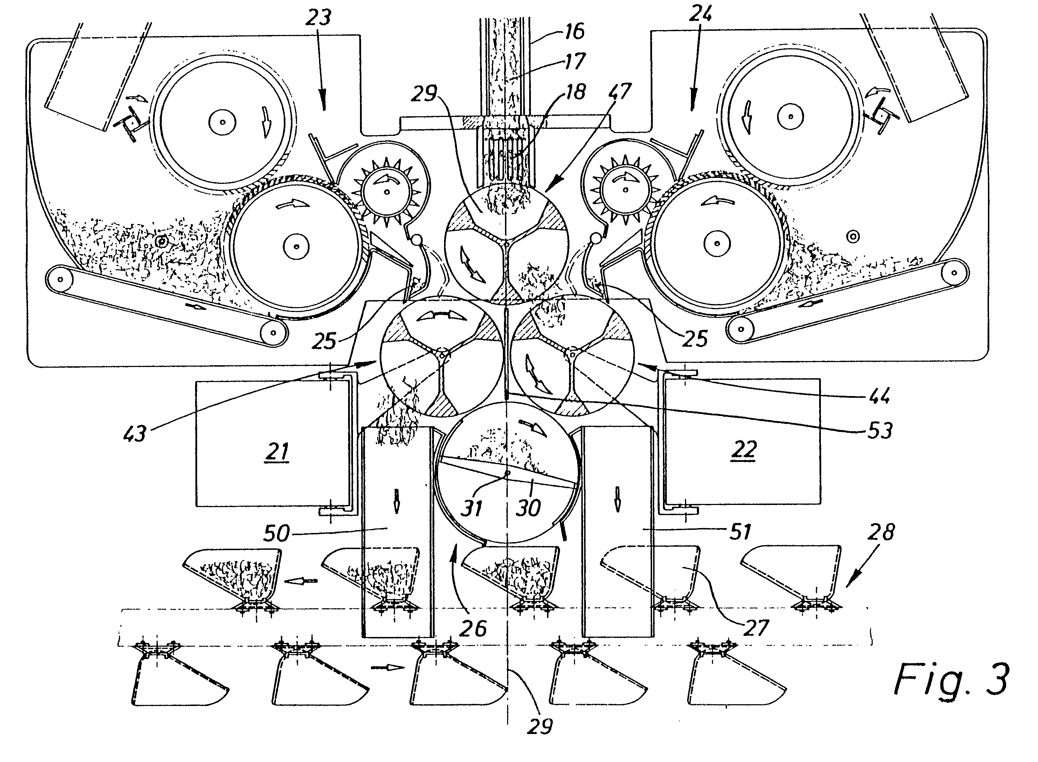

Die Übergabe von Portionen 10 an das Verteilerorgan 26 erfolgt alternativ von der einen oder anderen Tabakwaage 21, 22, jedenfalls nicht gleichzeitig. Bei der in Fig. 4 gezeigten Position ist die Portion 10 von der links gezeigten Aufnahme 43 übergeben worden. Für die Weitergabe an einen Becher 10 ist eine Drehung der Verteilerwand 30 (unter Mitnahme der Portion 10) längs eines Weges von nahezu 180° erforderlich, nämlich in eine Stellung, die in Fig. 5 noch nicht ganz erreicht ist. In der letztgenannten Position (45°) gleitet die Portion 10 von der einen Seite der Verteilerwand 30 auf die andere. Dabei gleitet die Portion 10 an dem Führungsblech 40 entlang, bis die Abwurföffnung 41 erreicht ist. Eine Zwischenstellung ist in Fig. 3 gezeigt. In dieser kann auch die Übergabe einer Portion 10 von der anderen, rechts angeordneten Tabakwaage 22 bzw. der Aufnahme 44 erfolgen.

Aufbau und Arbeitsweise der als Zellenräder ausgebildeten Aufnahmen 43 und 44 der Tabakwaagen 21, 22 entspricht vorzugsweise der in der Patentanmeldung P 32 26 654.5 (veröffentlicht 19/1/84) beschriebenen Ausführung. Den Aufnahmen 43, 44 ist dabei ein Zwischenförderer 47 in Förderrichtung vorgeschaltet, nämlich mittig zur Mittelebene 29 liegend. Auch dieser Zwischenförderer 47 ist in gleicher Weise ausgebildet wie bei der Vorrichtung gemäß Patentanmeldung P 32 26 654.5, nämlich als Zellenrad.

Die Feindosieraggregate 23, 24 können gleichermaßen im Sinne der genannten Patentanmeldung P 32 26 654.5 ausgebildet sein oder — mit geringfügiger Abweichung — wie die Feindosieraggregate der Vorrichtung laut DE-OS 23 38 374.

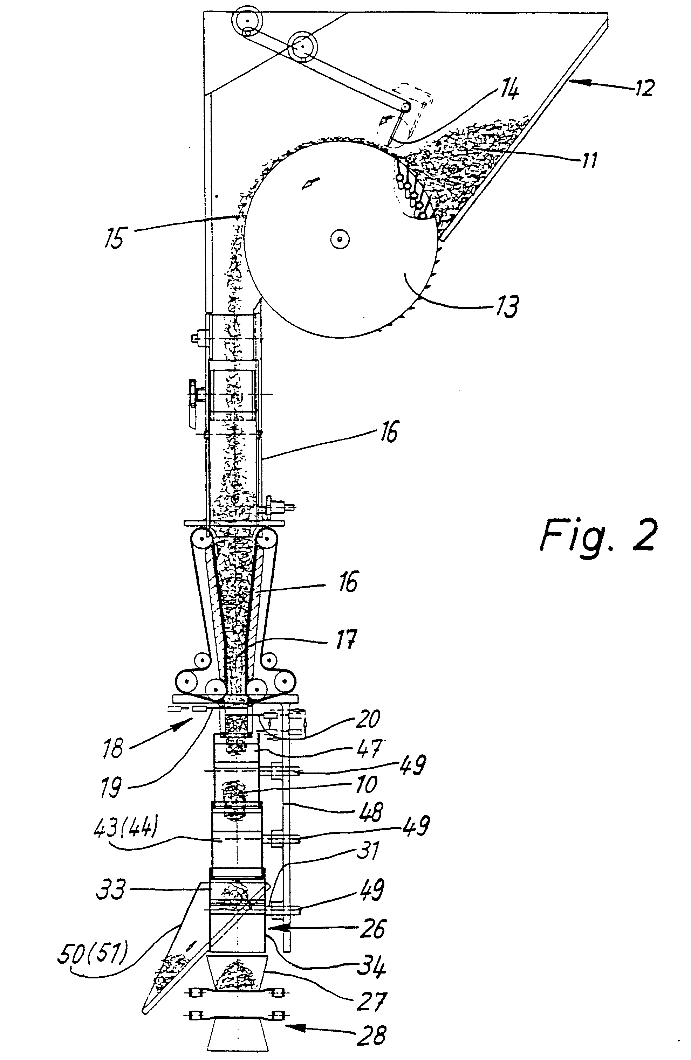

Die genannten drehenden Aggregate sind, wie aus Fig. 2 ersichtlich, an einer gemeinsamen, aufrechten Tragplatte 48 gelagert. Diese ist geeigneter Weise mit einem Maschinengestell verbunden. Jedem drehenden Organ, nämlich dem Zwischenförderer 47, den Aufnahmen 43 und 44 sowie dem Verteilerorgan 26, sind drehend angetriebene Antriebswellen 49 zugeordnet, die in der Tragplatte gelagert sind.

Im Bereich der Abförderung von Portionen 10 sind bei dem vorliegenden Ausführungsbeispiel zu beiden Seiten des Verteilerorgans 26 Abwurffrutschen 50 und 51 feststehend angeordnet. Diese sind in bezug auf die Aufnahmen 43, 44 so angeordnet, daß jeweils in den seitlichen bzw. äußeren Zellen beförderte Portionen an die Abwurffrutschen 50 oder 51 übergeben werden. Durch diese werden Portionen 10 abgefördert, die extrem unterdimensioniert sind oder Übergewicht aufweisen aufgrund entsprechend ungenauer Abtrennung der Portion 10 von dem Tabakstrang 17. Untergewichtige Portionen 10 ergeben sich dann, wenn infolge der Differenz zum Sollgewicht die Feindosieraggregate 23, 24 nicht darauf eingerichtet sind, eine verhältnismäßig große Differenzportion innerhalb angemessener Taktzeit zuzuführen. In diesem Falle wird die betreffende Aufnahme 43 oder 44 in entgegengesetzter Richtung gedreht, so daß die betreffende Zellen 45 oder 46 in den Aufnahmebereich der Abwurffrutsche 50 oder 51 gelangt. Die Fehlportion wird, wie aus Fig. 2 ersichtlich, seitlich abgeleitet. Die Führungsbleche 39, 40 sind bei dem vorliegenden Ausführungsbeispiel an den dem Verteilerorgan 26 zugekehrten Seiten der Abwurffrutschen 50, 51 angeordnet.

Eine weitere Besonderheit besteht darin, daß hier zwischen den als Zellenräder ausgebildeten Aufnahmen 43, 44 in der aufrechten Mittelebene 29 eine Trennwand 53 angeordnet ist. Diese bewirkt, daß die dem Verteilerorgan von den Aufnahmen 43, 44 zuzuführenden Portionen in die korrekte Position geleitet werden.

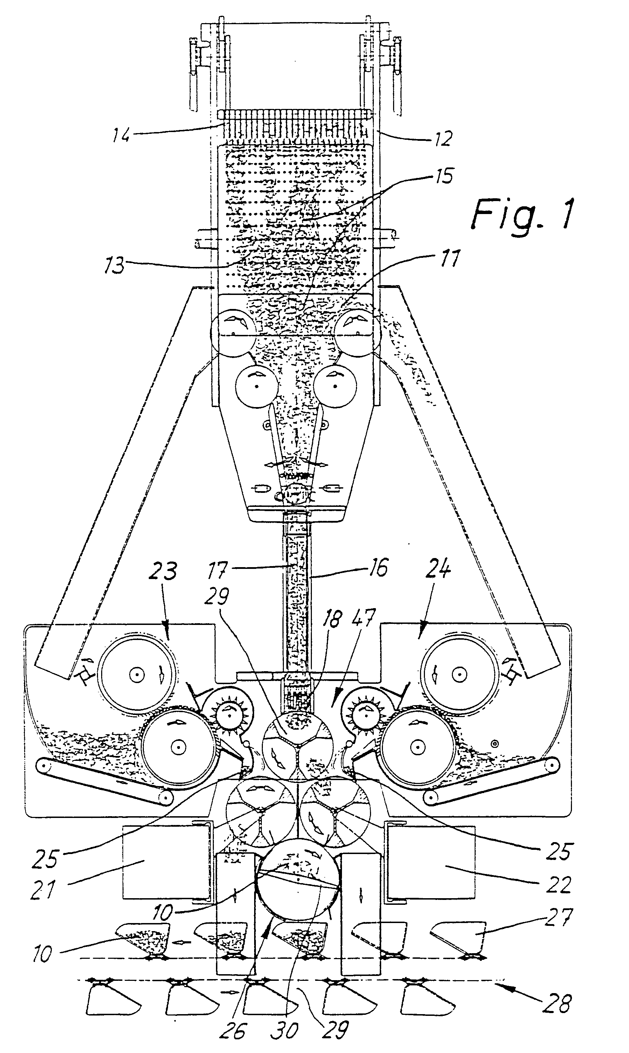

Das vorliegende Ausführungsbeispiel ist hinsichtlich der Synchronbewegung von Verteilerorgan 26 und Becherkette 28 so aufeinander abgestimmt, daß die Becher 27 nacheinander gefüllt werden. Eine Umdrehung des Verteilerorgans 26 entspricht der Bewegung der Becherketten 28 von einem Becher 27 zum nächsten. In der Praxis werden vielfach Doppelaggregate für eine gemeinsame Becherkette eingesetzt, also zwei Vorrichtungen im Sinne der Fig. 1 nebeneinander. In diesem Falle ist die Geschwindigkeit der Becherkette — bei Aufrechterhaltung des Synchronlaufs mit dem Verteilerorgan 26 — so erhöht, daß jedes Verteilerorgan jeden zweiten Becher beschickt.

Bei dem gezeigten Ausführungsbeispiel ist das Verteilerorgan 26 so gestaltet, daß es einen Durchmesser von etwa 260 mm aufweist. Der Öffnungswinkel der Abwurföffnung 41 beträgt etwa 50°-55°.

## Patentansprüche

1. Vorrichtung zur Bildung von Portionen aus faserigem Gut, insbesondere Schnittabak, und zum Abtransport derselben durch einen Förderer mit Aufnahmen für je eine Portion, insbesondere durch eine Becherkette, wobei die Portionen durch ein oberhalb des Förderers angeordnetes Verteilerorgan den Bechern oder dgl. des Förderers zuführbar sind, dadurch gekennzeichnet, daß das Verteilerorgan (26) wenigstens eine synchron mit dem mit Aufnahmen versehenen Förderer (28) umlaufende Verteilerwand (30) aufweist zur Aufnahme jeweils einer Portion (10) und Weiterleitung an eine Aufnahme (27) des Förderers nach einer Teilbewegung der Verteilerwand (30).

2. Vorrichtung nach Anspruch 1, dadurch gekennzeichnet, daß die Verteilerwand (30) um eine mittlere Querachse (Drehachse 31) drehend angetrieben ist.

3. Vorrichtung nach Anspruch 1 oder 2, dadurch gekennzeichnet, daß die Verteilerwand (30) zu den radial außenliegenden Längsseiten (34, 35) hin konvergierend ausgebildet ist, insbesondere ebene konvergierende Gleitflächen (52) aufweist.

4. Vorrichtung nach Anspruch 1 sowie einem oder mehreren der weiteren Ansprüche, dadurch gekennzeichnet, daß die Verteilerwand (30) unterhalb mehrerer, insbesonderere zweier, Zuführungsorgane, vorzugsweise Aufnahmen (43, 44) von Tabakwaagen (21, 22), zur alternativen Zuführung von Portionen (10) angeordnet ist.

5. Vorrichtung nach Anspruch 1 sowie einem oder mehreren der weiteren Ansprüche, dadurch gekennzeichnet, daß an radial außenliegenden Längsseiten (35) der Verteilerwand (30) jeweils in Umlaufrichtung weisende Haltewandungen anschließen, insbesondere teilkreisbogenförmige Haltebleche (36, 37).

6. Vorrichtung nach Anspruch 1 sowie einem oder mehreren der weiteren Ansprüche, dadurch gekennzeichnet, daß an Stirnwänden (32) der Verteilerwand (30) (kreisflächenförmige) Seitenwände (33, 34) angebracht sind, zwischen denen sich die Verteilerwand (30) und die Haltebleche (36, 37) erstrecken.

7. Vorrichtung nach Anspruch 1 sowie einem oder mehreren der weiteren Ansprüche, dadurch gekennzeichnet, daß seitlich eng neben der Umlaufbahn der Verteilerwand (30) wenigstens ein feststehendes Führungsblech (39, 40) angebracht ist, welches mit der Verteilerwand (30), den Halteblechen (36, 37) und den Seitenwänden (33, 34) sich verändernde und öffnende Räume zur zeitweiligen Aufnahme einer Portion (10) bilden.

8. Vorrichtung nach Anspruch 7, dadurch gekennzeichnet, daß zu beiden Seiten des Verteilerorgans (26) Führungsbleche (39, 40) angeordnet sind, die nach unten eine Abwurföffnung (41) für die Portionen (10) begrenzen.

9. Vorrichtung nach Anspruch 8, dadurch gekennzeichnet, daß die Abwurföffnung (41) gegenüber einer (vertikalen) Mittelebene (29) in bezug auf die Förderrichtung der Becherkette (28) nach rückwärts versetzt angeordnet ist.

10. Vorrichtung nach Anspruch 1 sowie einem oder mehreren der weiteren Ansprüche, dadurch gekennzeichnet, daß das Verteilerorgan (26) durch die Verteilerwand (30) in zwei umlaufende Kammern unterteilt ist, die alternativ zur Aufnahme einer Portion (10) dienen, wobei die Übergabe derselben an die Becherkette (28) aus der in Förderrichtung der Becherkette rückwärts gerichteten Kammer erfolgt.

11. Vorrichtung nach Anspruch 1 sowie einem oder mehreren der weiteren Ansprüche, dadurch gekennzeichnet, daß die Drehbewegung des Verteilerorgans (26) sowie die (geradlinige) Bewegung der Becherkette (28) derart aufeinander abgestimmt sind, daß während der Phase der Übergabe einer Portion eine Auffangwand (42) eines Bechers (27) in Förderrichtung über die äußere Begrenzung der Verteilerwand (30) hinwegragt.

12. Vorrichtung nach Anspruch 1 sowie einem oder mehreren der weiteren Ansprüche, dadurch gekennzeichnet, daß eine halbe Umdrehung des Verteilerorgans (26) etwa einem Bewegungsabschnitt von einem zum nächsten Becher (27) entspricht.

13. Vorrichtung nach Anspruch 1 sowie einem oder mehreren der weiteren Ansprüche, dadurch gekennzeichnet, daß die dem Verteilerorgan (26) in Förderrichtung (oberhalb desselben) vorgeordneten Aufnahmen (43, 44) der Tabakwaagen (21, 22) als Zellenräder mit je drei verteilt angeordneten, radial außen offenen Zellen (45, 46) ausgebildet sind.

14. Vorrichtung nach Anspruch 13, dadurch gekennzeichnet, daß zwischen den als Zellenräder ausgebildeten Aufnahmen (43, 44) der Tabakwaagen (21, 22) eine aufrechte, sich in der Mittelebene (29) erstreckende Trennwand (53) oberhalb des Verteilerorgans (26) angeordnet ist.

15. Vorrichtung nach Anspruch 1 sowie einem oder mehreren der weiteren Ansprüche, dadurch gekennzeichnet, daß zu beiden Seiten des Verteilerorgans (26) je eine Abwurfrutsche (50, 51) für Fehlportionen unterhalb der Aufnahmen (43, 44) angeordnet ist.

## Claims

1. An apparatus for forming portions of fibrous material, especially cut tobacco, and for transporting them away by means of a conveyor having receptacles, each for one portion, especially by means of a bucket chain, in which apparatus the portions can be fed to the buckets or the like of the conveyor by means of a distributor device located above the conveyor, characterized in that the distributor device (26) has at least one distributor wall (30) which rotates synchronously with the conveyor, which is provided with receptacles, (28) and which is intended for receiving one portion (10) at any particular time and for transferring this to one of the receptacles (27) of the conveyor after a partial movement of the distributor wall (30).

2. An apparatus according to Claim 1, characterized in that the distributor wall (30) is driven to rotate about a central transverse axis (axis of rotation 31).

3. An apparatus according to Claim 1 or 2, characterized in that the distributor wall (30) is made to converge towards the radially outer longitudinal sides (34, 35), and, in particular, has plane converging sliding surfaces (52).

4. An apparatus according to Claim 1 and one or more of the further claims, characterized in that the distributor wall (30) is located underneath several, especially two feed devices, preferably receptacles (43, 44) of tobacco balances (21, 22), for feeding portions (10) alternately.

5. An apparatus according to Claim 1 and one or more of the further claims, characterized in that retaining walls pointing in the direction of rotation, especially retaining plates (36, 37) in the form of parts of circular arcs, respectively adjoin radially outer longitudinal sides (35) of the distributor wall (30).

6. An apparatus according to Claim 1 and one or more of the further claims, characterized in that side walls (33, 34) (in the form of circular surfaces), between which the distributor wall (30) and the retaining plates (36, 37) extend, are attached to end walls (32) of the distributor wall (30).

7. An apparatus according to Claim 1 and one or more of the further claims, characterized in that at least one fixed guide plate (39, 40) is attached laterally close to the path of rotation of the distributor wall (30), and these form, together with the distributor wall (30), the retaining plates (36, 37) and the side walls (33, 34), changing and opening spaces for temporarily receiving a portion (10).

8. An apparatus according to Claim 7, characterized in that guide plates (39, 40) are located on both sides of the distributor device (26) and limit downwards a dropping orifice (41) for the portions (10).

9. An apparatus according to Claim 8, characterized in that the dropping orifice (41) is arranged offset to the rear relative to a (vertical) centre plane (29) in relation to the conveying direction of the bucket chain (28).

10. An apparatus according to Claim 1 and one or more of the further claims, characterized in that the distributor device (26) is divided by the distributor wall (30) into two rotating chambers which serve alternately for receiving a portion (10), the latter being transferred to the bucket chain (28) from the chamber directed to the rear in the conveying direction of the bucket chain.

11. An apparatus according to claim 1 and one or more of the further claims, characterized in that the rotary movement of the distributor device (26) and the (straight-line) movement of the bucket chain (28) are coordinated with one another in such a way that, during the phase in which a portion is transferred, a collecting wall (42) of a bucket (27) projects in the conveying direction beyond the outer limitation of the distributor wall (30).

12. An apparatus according to Claim 1 and one or more of the further claims, characterized in that half a revolution of the distributor device (26) corresponds approximately to a stage of movement from one bucket (27) to the next.

13. An apparatus according to Claim 1 and one or more of the further claims, characterized in that the receptacles (43, 44) located in front of the distributor device (26) in the conveying direction (above the latter) and belonging to the tobacco balances (21, 22) are designed as star feeders, each with three allotted cells (45, 46) open radially outwards.

14. An apparatus according to Claim 13, characterized in that a vertical partition wall (53) extending in the centre plane (29) is located above the distributor device (26) between the receptacles (43, 44) designed as star feeders and belonging to the tobacco balances (21, 22).

15. An apparatus according to Claim 1 and one or more of the further claims, characterized in that a discharge chute (50, 51) for incorrect portions is located underneath each of the receptacles (43, 44) on each of the two sides of the distributor device (26).

**Revendications**

1. Appareil pour la formation de portions de produit fibreux, en particulier de tabac découpé ou scaferlati, et évacuation de celles-ci par un convoyeur muni de réceptacles, chacun pour une portion, en particulier par une chaîne à godets, les portions étant amenables aux godets, ou analogues, du convoyeur par un organe distributeur situé au-dessus du convoyeur, caractérisé par le fait que l'organe distributeur (26) possède au moins une paroi distributrice (30), tournant en synchronisme avec le convoyeur muni de réceptacles, pour recevoir chaque fois une portion (10) puis l'envoyer sur un réceptacle (27) du convoyeur après un déplacement partiel de la paroi distributrice (30).

2. Appareil selon la revendication 1, caractérisé par le fait que la paroi distributrice (30) est montée tournante autour d'un axe transversal central (axe de rotation 31).

3. Appareil selon la revendication 1 ou 2, caractérisé par le fait que la paroi distributrice (30) est formée en convergeant vers les côtés longitudinaux (35) situés radialement à l'extérieur, en particulier possède des surfaces de glissement (52) convergentes planes.

4. Appareil selon la revendication 1 et l'une ou plusieurs des autres revendications, caractérisé par le fait que la paroi distributrice (30) est disposée sous plusieurs, en particulier deux, organes d'amenée, avantageusement réceptacles (43, 44) de balance à tabac (21, 22) pour l'amenée alternative de portions (10).

5. Appareil selon la revendication 1 et l'une ou plusieurs des autres revendications, caractérisé par le fait qu'à chacun des côtés longitudinaux extérieurs radialement (35) de la paroi distributrice (30) se raccorde une paroi de retenue s'étendant en direction de rotation, en particulier une tôle de retenue (36, 37) en forme d'arc de cercle partiel.

6. Appareil selon la revendication 1 et l'une ou plusieurs des autres revendications, caractérisé par le fait que sur des parois de bout (32) de la paroi distributrice (30) sont montées des parois latérales (en forme de surfaces circulaires) (33, 34), entre lesquelles s'étend la paroi distributrice (30) et les tôles de retenue (36, 37).

7. Appareil selon la revendication 1 et l'une ou plusieurs des autres revendications, caractérisé par le fait que latéralement et à proximité immédiate de la trajectoire de rotation de la paroi distributrice (30), est disposée au moins une tôle de guidage fixe (39, 40) qui, avec la paroi distributrice (30), les tôles de retenue (36, 37) et les parois latérales (33, 34) forment un espace qui se modifie et s'ouvre pour recevoir une portion (10) par intermittence.

8. Appareil selon la revendication 7, caractérisé par le fait que, des deux côtés de l'organe distributeur (26) sont disposées des tôles de guidage (39, 40) qui délimitent vers le bas une ouverture de déversement (41) pour les portions (10).

9. Appareil selon la revendication 8, caractérisé par le fait que l'ouverture de déversement (41) est disposée décalée vers l'arrière relativement à la direction de transport de la chaîne à godets (28), par rapport à un plan médian (vertical) (29).

10. Appareil selon la revendication 1 et l'une ou plusieurs des autres revendications, caractérisé par le fait que l'organe distributeur (26) est subdivisé, par la paroi distributrice (30) en deux chambres tournantes qui servent alternativement à la réception d'une portion (10), le transfert de celle-ci sur la chaîne à godets (28) s'opérant de la chambre dirigée vers l'arrière, par rapport à la direction de transport de la chaîne à godets.

11. Appareil selon la revendication 1 et l'une ou plusieurs des autres revendications, caractérisé par le fait que le mouvement de rotation de l'organe distributeur (26) ainsi que le mouvement (rectiligne) de la chaîne à godets (28) sont fixés l'un par rapport à l'autre de manière que, pendant la phase de transfert d'une portion, une paroi collectrice (42) d'un godet (27) passe au-delà de la limite extérieure de la paroi distributrice (30).

12. Appareil selon la revendication 1 et l'une ou plusieurs des autres revendications, caractérisé par le fait qu'un demi-tour de l'organe distributeur (26) correspond à peu près à une section de déplacement d'un godet (27) au suivant.

13. Appareil selon la revendication 1 et l'une ou plusieurs des autres revendications, caractérisé par le fait que les réceptacles (43, 44) des balances à tabac (21, 22) situés en amont (au-dessus) de l'organe distributeur (26) sont agencés en roues cellulaires à chacune trois cellules ouvertes vers l'extérieur radialement, et distribuées dans la roue.

14. Appareil selon la revendication 13, caractérisé par le fait qu'entre les réceptacles (43, 44), en forme de roues cellulaires, des balances à tabac (21, 22) est disposée, au-dessus de l'organe distributeur (26), une paroi séparatrice (53) verticale, s'étendant dans le plan médian (29).

15. Appareil selon la revendication 1 et l'une ou plusieurs des autres revendications, caractérisé par le fait que, des deux côtés de l'organe distributeur (26) est disposé sous chacun des réceptacles (43, 44) un couloir de déversement (50, 51) pour des portions défectueuses.

Fig. 1

*Fig. 2*

Fig. 3

Fig. 4

EP 0 124 740 B1

Fig.5

EP 0 124 740 B1